Europäisches Patentamt

(19) European Patent Office    (11) Numéro de publication: **0 171 314**

Office européen des brevets    **B1**

(12)    FASCICULE DE BREVET EUROPÉEN

(45) Date de publication du fascicule du brevet:    (51) Int. Cl. ⁵ : **G 01 D   5/34**
07.02.90

(21) Numéro de dépôt: 85401370.3

(22) Date de dépôt: 05.07.85

(54) Perfectionnements aux dispositifs de lecture pour capteurs optiques de position à plusieurs pistes codées.

(30) Priorité: 05.07.84 FR 8410689

(43) Date de publication de la demande:
12.02.86 Bulletin 86/07

(45) Mention de la délivrance du brevet:
07.02.90 Bulletin 90/06

(84) Etats contractants désignés:
AT BE CH DE GB IT LI LU NL SE

(56) Documents cité:
DE-A-2 948 182
FR-A-2 466 748
FR-A-2 468 880
US-A-3 100 846
US-A-3 205 364
US-A-4 124 839
US-A-4 338 517

(73) Titulaire: M.C.B.
11, rue Pierre Lhomme
F-92400 Courbevoie (FR)

(72) Inventeur: Gambs, Paul
21, avenue Pasteur
F-92400 Courbevoie (FR)
Inventeur: Taillebois, Jacques
Résidence Brigitte 23, rue des Ebisoires
F-78370 Plaisir (FR)
Inventeur: Dubus, Stéphane
2, rue Faidherbe
F-92270 Bois-Colombes (FR)

(74) Mandataire: Lecca, Jean
CABINET PLASSERAUD 84, rue d'Amsterdam
F-75009 Paris (FR)

EP 0 171 314 B1

2

## Description

La présente invention concerne les capteurs optiques de position à plusieurs pistes codées disposées sur une surface commune, et plus particulièrement les dispositifs de lecture que comportent de tels capteurs, dispositifs composés de plusieurs détecteurs élémentaires dont chacun est disposé pour recueillir l'information fournie par l'une des pistes codées, information qui est explorée par un faisceau lumineux issu d'une source et frappant les détecteurs après traversée des pistes.

On sait qu'il existe plusieurs types de tels capteurs de position: certains déterminent des déplacements rectilignes, tandis que d'autres déterminent des déplacements angulaires; dans chacun des cas les pistes peuvent être fixes et les lecteurs mobiles, ou bien les pistes peuvent être mobiles et les lecteurs fixes. L'invention s'applique indifféremment à ces différents types de capteurs.

La section dans le plan des pistes codées du faisceau de lumière issu d'une source lumineuse qui va apporter aux détecteurs l'information attendue a une influence décisive sur la résolution, la précision et la fiabilité de la mesure effectuée par le dispositif de lecture. D'autre part, la forme plus ou moins convergente du faisceau a une influence déterminante sur le niveau du signal qui est, toutes choses égales d'ailleurs, proportionnel à l'angle solide rempli par le faisceau; la précision exige par contre des tolérances de positionnement axial des composants optiques d'autant plus sévères que cet angle solide est plus élevé.

Par ailleurs, il importe de prendre des dispositions pour que chaque détecteur reçoive la plus grande partie possible de l'énergie lumineuse traversant, au point voulu, la piste qui lui correspond, ce qui répond à la notion de sensibilité, et la plus faible partie possible de l'énergie provenant des autres pistes, ce qui répond à la notion d'immunité à la diaphonie. Si l'on dispose de moyens optiques appropriés, la résolution du capteur sera essentiellement et directement déterminée par les dimensions de la section par le plan des pistes codées du faisceau issu de la source de lumière et guidé par les moyens optiques, encore capable d'apporter au détecteur l'énergie suffisante en niveau et en modulation pour le faire fonctionner.

Pour diminuer l'influence diaphonique des tolérances s'exerçant parallèlement à l'axe optique du système, une disposition très anciennement et très généralement adoptée consiste à rendre parallèles entre eux et perpendiculaires au plan du code, les axes des faisceaux traversant les différentes pistes, et à disposer chacun des détecteurs dans le prolongement d'un de ces axes, passant par la piste affectée au détecteur.

Une autre disposition connue consiste à interposer dans le passage de ces faisceaux parallèles, au voisinage de la surface du code, un écran opaque comportant des fenêtres transparentes, qui assurent le calibrage des différents faisceaux ainsi que la définition précise de la position ou des positions périodiques relatives du code et du lecteur qui correspondent pour une piste à un certain niveau du signal reçu par le détecteur affecté à cette piste.

Pour améliorer l'intensité lumineuse des faisceaux qui traversent ces fenêtres transparentes sans nuire au parallélisme des axes des différents faisceaux, on connaît par ailleurs l'efficacité d'un demi-cylindre convergent dont l'axe est parallèle à l'axe commun des fenêtres.

Enfin on a proposé récemment de réaliser la synthèse des avantages procurés par ces différents dispositifs en supprimant le réticule jugé coûteux et en le remplaçant par une image de la source lumineuse projetée sur la surface codée, fractionnée de manière plus ou moins efficace par des diaphragmes à ouvertures multiples rectangulaires disposés au voisinage des surfaces réfringentes des éléments optiques.

Dans une telle solution, la section du faisceau lumineux au niveau du code et, par conséquent, la résolution du codeur dépendent directement de la finesse de la source dont l'image est projetée sur le code, de la définition fournie par l'optique et du positionnement précis de tous ces composants. En outre, cette solution fait appel à une source rectiligne dont la réalisation en diode photoémettrice est coûteuse et délicate; de plus, comme cette source est inévitablement étendue dans la direction perpendiculaire à l'axe optique et parallèle à l'axe commun des éléments récepteurs, les projections, sur le plan commun à ces axes, des rayons émergeant des diaphragmes rectangulaires placés au contact des surfaces réfringentes ne sont que médiocrement proches du parallélisme, et il en résulte un risque de diaphonie, ce qui oblige soit à écarter les récepteurs, solution défavorable à la miniaturisation, soit à réduire la surface des récepteurs, ce qui réduit leur sensibilité.

La complexité du système optique, l'exigence d'une source lumineuse spéciale et la multiplicité des réglages nécessaires pour assurer la précision du codeur sont en fait en contradiction avec l'objectif de réduction de coût auquel répond la suppression du réticule, et il est peu probable que la balance soit en définitive favorable.

Bien entendu le centrage de la source lumineuse ayant une influence directe sur la cohérence du code lu, son remplacement nécessite un réglage particulièrement délicat.

En outre, comme les différents éléments dont le positionnement conditionne directement la précision du codeur sont échelonnés le long d'un axe optique relativement long, le risque de dégradation de cette précision sous l'effet des vibrations est important et doit être pallié par une construction plus lourde, plus encombrante et plus coûteuse.

On connaît en particulier, d'après le brevet US-A-4 338 517, un détecteur de la rotation d'un arbre qui comporte, d'une part, $n$ pistes codées disposées sur une surface commune, une source lumineuse et un ensemble mobile par rapport aux pistes et à la source lumineuse et comportant n détecteurs élémentaires, un système optique et un diaphragme constitué par une couche opaque déposée sur une lame transparente et portant une disposition codée. L'objet de ce brevet US est de réaliser un détecteur démontable.

La demande de brevet français n° 2 466 748 décrit un transducteur optique pour la détection de la position angulaire d'un organe tournant avec élimination des effets de pénombre grâce à l'alignement de deux diaphragmes à fenêtres (masques fixes 60 et 61) disposés de part et d'autre d'un disque (40) à ouvertures codées. On doit noter que l'alignement réalisé dans cette demande de brevet est peu concevable dans le cadre d'un codeur à haute résolution avec un grand nombre de paires de pistes concentriques.

Le brevet US-A-3 100 846 concerne un procédé pour mesurer et ajuster la position d'objets et il repose sur la conjugaison optique entre un diaphragme (2 ou 10) et sa projection sur une règle codée (3), l'image projetée servant de repère spatial.

Le brevet US-A-3 205 364 concerne un codeur dans lequel les éléments photosensibles (26) sont montés à proximité immédiate du disque codé. Une telle disposition est très difficile à réaliser du fait de la présence de connexions (bondings) sur la même face du cristal de silicium que les éléments photosensibles et d'une fenêtre transparente de fermeture étanche du boîtier dans lequel ledit cristal se trouve à l'abri de l'oxydation. Dans ce brevet US la fonction de repérage spatial et la fonction de détection du signal ne sont pas dissociées.

La demande de brevet allemand 2 948 182 décrit un dispositif dans lequel on respecte la décomposition fonctionnelle en repérage spatial et en détection du signal, mais la détection par des éléments discrets impose des espacements considérables entre les différentes phases, ce qui pose des problèmes très difficiles pour l'implantation d'un codeur à haute résolution. En outre la proximité des axes optiques des collectrices, représentées sur la figure 8 de cette demande avec la référence 290, risque de provoquer une diaphonie.

La présente invention vise à permettre de résoudre ce problème en réalisant un dispositif de lecture à n détecteurs élémentaires pour capteur de position comportant n pistes codées disposées sur une surface commune, une source lumineuse, un système optique, et un diaphragme constitué par une couche mince opaque déposée sur une lame transparente et portant une disposition codée, de manière que la source lumineuse, le système optique et le diaphragme se diplacent constamment d'un bloc relativement aux n pistes codées disposées sur la surface commune, caractérisé en ce que ladite couche mince déposée sur la lame transparente comporte n ouvertures constituées par des découpures de ladite couche mince qui forment des fenêtres correspondant aux largeurs et écartements des n pistes; en ce que ladite lame est rendue définitivement solidaire d'un support ou de piliers de support qui porte/portent au moins un ensemble de n détecteurs élémentaires de manière que le diaphragme avec son support ou ses piliers de support et cet ensemble de détecteurs, avec la source lumineuse et le système optique, se déplacent constamment d'un bloc relativement aux n pistes codées disposées sur une surface commune, au cours de toutes les opérations de réglage, d'une part, et de fonctionnement du capteur, d'autre part; et en ce que le système optique forme une image astigmate de cette source lumineuse sur le diaphragme.

Avantageusement le diaphragme est constitué par une couche mince opaque déposée sur une lame transparente et dotée de découpures formant fenêtres, cette lame pouvant par exemple:

- soit servir de fermeture à un boîtier constituant ledit support et dans lequel est fixé et protégé l'ensemble des détecteurs;
- soit être fixée sur une autre lame transparente qui sert de fermeture à un boîtier constituant ledit support et dans lequel est fixé et protégé l'ensemble des détecteurs;
- soit être fixée sur une autre lame transparente isolante dont la face opposée porte une métallisation et reçoit par fixation adhésive conductrice une plaquette semi-conductrice qui porte des éléments photosensibles constituant les détecteurs;
- soit porter, sur la face opposée à celle qui comporte la couche opaque, une métallisation et recevoir par fixation adhésive conductrice, sur cette face opposée, au moins une plaquette semi-conductrice qui porte des éléments photosensibles constituant les détecteurs.

En ce qui concerne le système optique de formation du faisceau lumineux éclairant le diaphragme, celui-ci comporte avantageusement, en regard d'une source de lumière et à partir de celle-ci en direction du diaphragme puis de la surface des pistes, successivement un système transformateur de convergence, un système de collimation et un système convergent astigmate. De préférence:

- le système transformateur de convergence est constitué soit par une lentille plan-convexe tournant sa face plane vers la source de lumière, soit par un ménisque convergent tournant sa face concave vers la source de lumière;
- le système de collimation est constitué par une seconde lentille plan-convexe tournant sa face plane vers la lumière incidente; et/ou
- le système convergent astigmate est constitué par une lentille plan-convexe hémi-cylindrique, dont la convexité est tournée vers le système collimateur et la face plane est tournée vers le diaphragme.

L'invention pourra, de toute façon, être bien comprise à l'aide du complément de description qui suit, ainsi que des dessins ci-annexés, lesquels complément et dessins sont, bien entendu, donnés surtout à titre d'indication.

La figure 1 est une vue en coupe axiale d'un premier mode de réalisation préféré d'un capteur optique de position angulaire, doté des perfectionnements selon l'invention.

La figure 2 est une coupe partielle par II - II de la figure 1.

La figure 3 est une vue en coupe axiale d'un second mode de réalisation préféré d'un capteur optique de position angulaire, doté des perfectionnements selon l'invention.

La figure 4 est une coupe simplifiée et à échelle réduite, par IV - IV, de la figure 3.

Selon l'invention et plus spécialement selon celui de ses modes d'application, ainsi que selon ceux des modes de réalisation de ses diverses parties, auxquels il semble qu'il y ait lieu d'accorder la préférence, se proposant, par exemple, de réaliser un dispositif de lecture pour capteur optique de position à plusieurs pistes codées, on s'y prend comme suit ou d'une manière analogue.

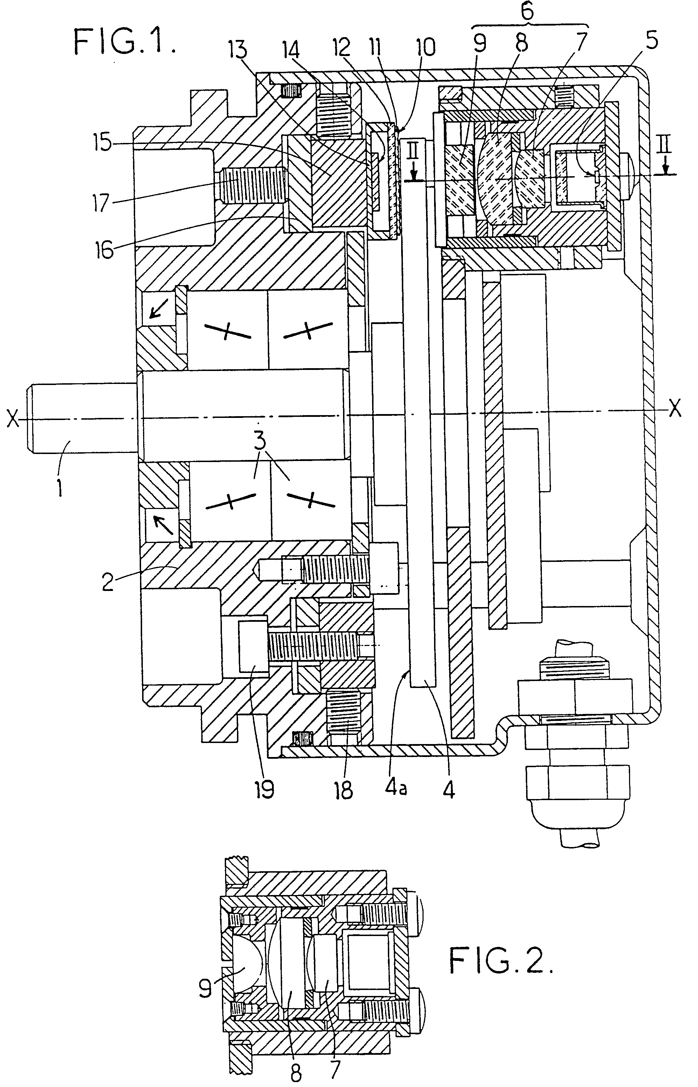

Sur les figures 1 et 2 on a illustré un premier mode de réalisation préféré d'un capteur optique apte à déterminer la position angulaire d'un arbre 1 tournant dans un corps 2 autour d'un axe XX, grâce à des paliers 3. Le capteur optique comporte un disque 4 en verre sur lequel est inscrite, par exemple par gravure, une surface codée 4a constituée par des zones élémentaires alternativement opaques et transparentes disposées dans un ordre déterminé sur un certain nombre de pistes circulaires concentriques. Les zones élémentaires opaques interceptent la lumière issue d'une source lumineuse 5 et traversant un système optique 6, tandis que les zones élémentaires transparentes laissent passer la lumière issue de la source 5 et ayant traversé le système optique 6.

La source de lumière 5 est avantageusement constituée par une diode émettrice de rayonnement infrarouge de surface émettrice relativement réduite.

Le système optique 6 comprend trois systèmes optiques 7, 8 et 9 (figures 1 et 2). Le système 7 comprend une lentille transformatrice de convergence, le système 8 est un système de collimation, tandis que le système 9 concentre la lumière sur les pistes circulaires concentriques.

Les modes de réalisation préférés des éléments 7, 8 et 9 du système optique 6 seront indiqués ci-après.

Le diaphragme 10 à plusieurs fenêtres (n fenêtres pour n pistes) est formé par une mince couche de métallisation avec des réserves formant les fenêtres transparentes, déposée sur un support transparent 11 collé sur une lame de verre 12 qui est fixée en permanence par collage ou soudure sur un support en forme de boîtier 13 qui porte une plaquette semi-conductrice 14 sur laquelle ont été créés par diffusion des éléments photosensibles (n éléments photosensibles pour n pistes) constituant les détecteurs élémentaires affectés à la lecture optique des pistes de la surface codée 4a; ces détecteurs élémentaires de la plaquette 14 sont disposés en correspondance des fenêtres transparentes du diaphragme 10 qui leur correspondent respectivement. La lame de verre 12 assure également une fermeture étanche du boîtier 13 et protège la plaquette semi-conductrice 14.

Le boîtier 13 dont sont solidaires, d'une manière permanente, la lame transparente 12 portant le diaphragme 10 à fenêtres, d'une part, et la plaquette semi-conductrice 14 qui comporte les éléments photosensibles, d'autre part, est assujetti au corps fixe 2 du codeur par l'intermédiaire d'un système de réglage qui fait l'objet d'une demande de brevet européen déposée ce même jour par la demanderesse pour "Perfectionnements aux dispositifs de réglage des lecteurs pour capteurs de position angulaire" (EP-A-170 576) qui comprend essentiellement une platine de réglage 15, une rondelle 16, des vis d'appui 17, des vis de réglage radial 18 et des vis de blocage 19. Le réglage est effectué relativement à l'axe XX.

Dans le cas préféré d'une source de lumière 5 constituée par une diode émettrice dans l'infrarouge, le système optique 6 comprend:

- une lentille de forme plan-convexe, qui joue le rôle de transformateur de convergence 7 et qui tourne sa face plane vers la source de lumière;
- une lentille plan-convexe, qui joue le rôle de collimateur 8 et qui tourne sa face plane vers la source lumineuse, la lentille du système 8 étant réalisée dans le même verre que la lentille du système 7, ce verre ayant un indice de réfraction modéré; et
- un barreau convergent hémi-cylindrique, qui constitue un système concentrateur 9 avec sa convexité tournée vers la source de lumière et qui concentre la lumière qu'il reçoit sur l'alignement des fenêtres du diaphragme 10.

A titre de variante, la lentille du système 7 pourrait être constituée par un ménisque stigmatique aplanétique et réalisée en un verre d'indice plus élevé que le verre du système 8.

A titre d'autre variante, on peut prévoir que l'ensemble des lames 11 et 12 est remplacé par une seule lame transparente qui reçoit sur une face le diaphragme 10 à ouvertures multiples et qui est fixée par l'autre face sur le boîtier 13.

D'un autre côté, le système optique 6 pourrait être réalisé différemment de ce qui est illustré. Ainsi:

- le système 7 pourrait être constitué par un ménisque convergent tournant sa face concave vers la source de lumière 5;

7

- le système optique 6 pourrait comporter au moins un dioptre qui présente autour de l'axe optique deux courbures méridiennes principales différentes, toutes deux convexes, formant un ellipsoïde convexe ou un tore convexe, qui pourrait être engendré par la translation, le long d'une des sections méridiennes principales, de la section méridienne perpendiculaire et réciproquement;
- le système optique 6 pourrait comporter un dioptre non sphérique, de révolution autour de l'axe optique, et dont la section est une portion de courbe géométrique appartenant à la famille des sections coniques.

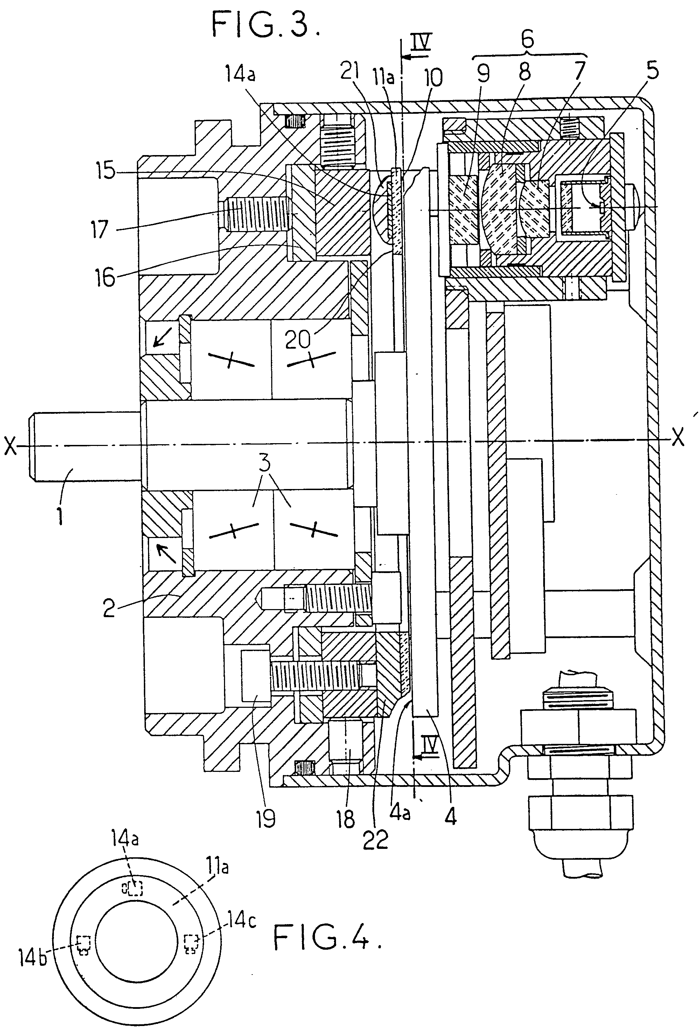

Référence étant maintenant faite aux figures 3 et 4, on va décrire un second mode de réalisation préféré de l'invention, également dans le cas d'un capteur optique de déplacement angulaire.

On a utilisé sur les figures 3 et 4 les mêmes références que sur les figures 1 et 2 pour désigner des éléments correspondants.

Tout d'abord la source 5 et le système optique 6 sont du même type, les variantes prévues ci-dessus pouvant également s'appliquer au cas du second mode de réalisation. Le disque 4 et la surface codée 4a sont également du même type que dans le cas de la figure 1.

La différence essentielle entre le second et le premier mode de réalisation est constituée par le fait que le diaphragme 10 à ouvertures multiples est disposé sur une lame transparente isolante 11a dont la face opposée porte une métallisation 20 qui reçoit, par fixation adhésive conductrice, une plaquette semi-conductrice 14a portant les éléments photosensibles. A titre d'exemple, la lame transparente 11a a la forme d'une couronne annulaire et elle porte, comme illustré sur la figure 4, trois lecteurs 14a, 14b et 14c, dont deux, 14b et 14c, sont disposés en regard l'un de l'autre pour réaliser une compensation des erreurs mécaniques de rotation connues sous le nom de "battement radial". Chacune des plaquettes semi-conductrices 14a, 14b et 14c est protégée par un enrobage 21 et la lame 11a est fixée sur la platine 15 par trois piliers 22.

Le système d'assujettissement au corps 2 de la platine de réglage 15, dont est solidaire l'ensemble du diaphragme 10 à fenêtres multiples et des plaquettes semi-conductrices 14a, 14b et 14c, peut être le même que dans le mode de réalisation des figures 1 et 2, à savoir du type décrit dans ladite demande de brevet déposée ce même jour par la demanderesse (EPA-170 576), et comporter, en plus de la platine de réglage 15, une rondelle 16, des vis d'appui 17, des vis de réglage radial 18 et des vis de blocage 19.

Comme il va de soi et comme il résulte d'ailleurs déjà de ce qui précède, l'invention ne se limite nullement à ceux de ses modes d'application et de réalisation qui ont été plus spécialement envisagés; elle en embrasse, au contraire, toutes les variantes.

En particulier le capteur optique de position doté des perfectionnements selon l'invention

8

pourrait constituer un capteur de position linéaire pour un organe en déplacement de translation linéaire, les n pistes codées étant dans ce cas des pistes linéaires parallèles, au lieu de constituer un capteur optique apte à déterminer la position angulaire d'un arbre tournant.

Par ailleurs le diaphragme à n ouvertures pourrait être constitué par une couche mince opaque déposée sur une lame transparente, elle-même fixée sur une autre lame transparente isolante, dont la face opposée porte des métallisations en forme de conducteurs et reçoit par fixation adhésive conductrice des composants optoélectroniques comprenant au moins une plaquette de semi-conducteur qui porte des éléments photosensibles.

**Revendications**

1. Dispositif de lecture à n détecteurs élémentaires pour capteur de position comportant n pistes codées disposées sur une surface commune (4a), une source lumineuse (5), un système optique (6 - 9), et un diaphragme (10) constitué par une couche mince opaque déposée sur une lame transparente (11; 11a) et portant une disposition codée, de manière que la source lumineuse, le système optique et le diaphragme se déplacent constamment d'un bloc relativement aux n pistes codées disposées sur la surface commune, caractérisé en ce que ladite couche mince déposée sur la lame transparente (11; 11a) comporte n ouvertures constituées par des découpures de ladite couche mince qui forment des fenêtres correspondant aux largeurs et écartements des n pistes; en ce que ladite lame (11; 11a) est rendue définitivement solidaire d'un support (13) ou de piliers de support (22) qui porte/portent au moins un ensemble (14; 14a, 14b, 14c) de n détecteurs élémentaires, de manière que le diaphragme (10) avec son support (13) ou ses piliers de support (22) et cet ensemble (14; 14a, 14b, 14c) de détecteurs, avec la source lumineuse (5) et le système optique (6 - 9), se déplacent constamment d'un bloc relativement aux n pistes codées disposées sur la surface commune (4a), au cours de toutes les opérations de réglage, d'une part, et de fonctionnement du capteur, d'autre part; et en ce que le système optique (6) forme une image astigmate de cette source lumineuse (5) sur le diaphragme (10).

2. Dispositif de lecture selon la revendication 1, caractérisé en ce que ladite lame transparente (11) sert de fermeture à un boîtier constituant ledit support (13) et dans lequel est fixé et protégé l'ensemble (14) des détecteurs.

3. Dispositif de lecture selon la revendication 1, caractérisé en ce que ladite lame transparente (11) est fixée sur une autre lame transparente (12) qui sert de fermeture à un boîtier constituant ledit support (13) et dans lequel est fixé et protégé l'ensemble (14) des détecteurs.

4. Dispositif de lecture selon la revendication 1, caractérisé en ce que ladite lame transparente (11a) porte, sur la face opposée à celle qui comporte la couche opaque, une métallisation (20) et reçoit par fixation adhésive conductrice, sur cette face opposée, au moins une plaquette semi-conductrice (14a, 14b, 14c) qui porte des éléments photosensibles constituant les détecteurs.

5. Dispositif de lecture selon la revendication 1, caractérisé en ce que le diaphragme (10) est constitué par une couche mince opaque déposée sur une lame transparente, elle-même fixée sur une autre lame transparente isolante, dont la face opposée porte des métallisations en forme de conducteurs et reçoit par fixation adhésive conductrice des composants optoélectroniques comprenant au moins une plaquette de semi-conducteur qui porte des éléments photosensibles.

6. Dispositif de lecture selon l'une quelconque des revendications précédentes, caractérisé en ce que le système optique (6) comporte avantageusement, en regard d'une source de lumière et à partir de celle-ci en direction du diaphragme puis de la surface des pistes, successivement un système transformateur de convergence (7) un système de collimation (8) et un système convergent astigmate (9).

7. Dispositif de lecture selon la revendication 6, caractérisé en ce que le système transformateur de convergence (7) est constitué par une lentille plan-convexe tournant sa face plane vers la source de lumière.

8. Dispositif de lecture selon la revendication 6, caractérisé en ce que le système transformateur de convergence (7) est constitué par un ménisque convergent tournant sa face concave vers la source de lumière.

9. Dispositif de lecture selon l'une quelconque des revendications 6 à 8, caractérisé en ce que le système de collimation (8) est constitué par une lentille plan-convexe tournant sa face plane vers la source de lumière.

10. Dispositif de lecture selon l'une quelconque des revendications 6 à 9, caractérisé en ce que le système convergent astigmate (9) est constitué par une lentille plan-convexe hémi-cylindrique, dont la convexité est tournée vers le système collimateur et la face plane est tournée vers le diaphragme.

11. Dispositif de lecture selon l'une quelconque des revendications précédentes, caractérisé en ce que le système optique (6) comporte au moins un dioptre qui présente, autour de l'axe optique, deux courbures méridiennes principales différentes, toutes deux convexes.

**Patentansprüche**

1. Ablesevorrichtung mit $n$ elementaren Detektoren für Positionssensoren mit $n$ kodierten, auf einer gemeinsamen Fläche (4a) angeordneten Spuren, mit einer Lichtquelle (5), einem optischen System (6 - 9) und einem Diaphragma (10), das von einer dünnen, lichtundurchlässigen, auf einer durchlässigen dünnen Platte niedergeschlagenen Schicht gebildet ist und eine kodierte Anordnung trägt, derart, daß die Lichtquelle, das optische System und das Diaphragma sich beständig von einem Block relativ zu den $n$ auf der gemeinsamen Fläche angeordneten kodierten Spuren verschieben, dadurch gekennzeichnet, daß die auf der durchlässigen dünnen Platte (11, 11a) niedergeschlagene dünne Schicht $n$ Öffnungen aufweist, welche von Durchbrechungen der dünnen Schicht gebildet sind, die der Größe und dem Abstand der $n$ Spuren entsprechende Fenster bilden; daß die dünne Platte (11, 11a) fest kraftschlüssig mit einem Stützelement (13) oder mit Stützpfeilern (22) verbunden ist, der/die wenigstens eine Anordnung (14, 14a, 14b, 14c) von $n$ elementaren Detektoren trägt/tragen, derart, daß das Diaphragma (10) mit seinem Stützelement (13) oder seinen Stützpfeilern (22) und diese Anordnung (14, 14a, 14b, 14c) von Detektoren mit der Lichtquelle (5) und dem optischen System (6 - 9) sich beständig von einem Block relativ zu den $n$ auf der gemeinsamen Fläche (4a) angeordneten kodierten Spuren während der ganzen Regeloperation einerseits und während der Funktion des Sensors andererseits verschieben; und daß das optische System (6) ein astigmatisches Bild dieser Lichtquelle (5) auf dem Diaphragma (10) bildet.

2. Ablesevorrichtung nach Anspruch 1, dadurch gekennzeichnet, daß die dünne durchlässige Platte (11) zum Schließen eines Gehäuses dient, welches das Stützelement (13) bildet und in welchem die Anordnung (14) der Detektoren befestigt und geschützt ist.

3. Ablesevorrichtung nach Anspruch 1, dadurch gekennzeichnet, daß die dünne durchsichtige Platte (11) an einer anderen dünnen durchlässige Platte (12) befestigt ist, die zum Verschließen eines Gehäuses dient, das das Stützelement (13) bildet und in dem die Anordnung (14) der Detektoren befestigt und geschützt ist.

4. Ablesevorrichtung nach Anspruch 1, dadurch gekennzeichnet, daß die dünne durchlässige Platte (11a) auf der der die dünne lichtundurchlässige Schicht aufweisenden Fläche gegenüberliegenden Fläche einen Metallüberzug (20) trägt und durch adhäsive leitende Befestigung auf der gegenüberliegenden Fläche wenigstens ein halbleitendes Plättchen (14a, 14b, 14c) aufnimmt, welches die Detektoren bildende fotosensible Elemente trägt.

5. Ablesevorrichtung nach Anspruch 1, dadurch gekennzeichnet, daß das Diaphragma (10) von einer dünnen lichtundurchlässigen Schicht gebildet ist, die auf einer dünnen durchlässigen Platte niedergeschlagen ist, welche selbst auf einer anderen isolierten dünnen durchlässigen Platte befestigt ist, deren gegenüberliegende Fläche einen Metallüberzug in Form von Leitern trägt und durch adhäsive leitende Befestigung optoelektronische Elemente aufnimmt, welche wenigstens ein fotosensible Elemente tragendes halbleitendes Plättchen aufweist.

6. Ablesevorrichtung nach einem der vorangehenden Ansprüche, dadurch gekennzeichnet, daß das optische System (6) im Verhältnis zu einer Lichtquelle und ausgehend von dieser in Richtung des Diaphragmas und dann der Fläche der Spuren vorteilhaft nacheinander ein System von Konvergenztransformatoren (7), ein Visiersystem (8) und ein konvergentes astigmatisches System (9) aufweist.

7. Ablesevorrichtung nach Anspruch 6, dadurch gekennzeichnet, daß das System von Konvergenztransformatoren (7) von einer plan-konvexen Linse gebildet ist, deren plane Fläche gegen die Lichtquelle gerichtet ist.

8. Ablesevorrichtung nach Anspruch 6, dadurch gekennzeichnet, daß das System von Konvergenztransformatoren (7) von einem konvergenten Meniskus gebildet ist, dessen konkave Fläche gegen die Lichtquelle gerichtet ist.

9. Ablesevorrichtung nach einem der Ansprüche 6 bis 8, dadurch gekennzeichnet, daß das Visiersystem (8) von einer plan-konvexen Linse gebildet ist, deren plane Fläche gegen die Lichtquelle gerichtet ist.

10. Ablesevorrichtung nach einem der Ansprüche 6 bis 9, dadurch gekennzeichnet, daß das konvergente astigmatische System (9) von einer halbzylindrischen plan-konvexen Linse gebildet ist, deren Konvexität gegen das Visiersystem und deren plane Fläche gegen das Diaphragma gerichtet ist.

11. Ablesevorrichtung nach einem der vorangehenden Ansprüche, dadurch gekennzeichnet, daß das optische System (6) wenigstens ein Diopter aufweist, das um seine optische Achse (2) meridiane, hauptsächlich verschiedene Wölbungen aufweist, wobei beide konvex sind.

**Claims**

1. A reading device with $n$ elementary detectors for a position sensor comprising $n$ encoded tracks disposed on a common surface (4a), a light source (5), an optical system (6 - 9) and a diaphragm (10) formed by a thin opaque layer deposited on a transparent plate (11; 11a) and bearing an encoded arrangement, such that the light source, the optical system and the diaphragm are constantly displaced by a block with respect to the $n$ encoded tracks disposed on the common surface, characterized in that the thin layer deposited on the transparent plate (11; 11a) comprises $n$ apertures formed by cut-outs from the thin layer which form windows corresponding to the widths and spacings of the $n$ tracks, in that the plate (11; 11a) is made rigid with a support (13) or support pillars (22) which bear at least one assembly (14; 14a, 14b, 14c) of $n$ elementary detectors so that the diaphragm (10), together with its support (13) or support pillars (22), and this assembly (14; 14a, 14b 14c) of detectors, with the light source (5) and the optical system (6 - 9), are displaced constantly by a block with respect to the $n$ encoded tracks disposed on the common surface (4a) during all the operations, on the one hand, to regulate and, on the other hand, to operate the sensor and in that the optical system (6) forms an astigmatic image of this light source (5) on the diaphragm (10).

2. A reading device as claimed in claim 1, characterized in that the transparent plate (11) acts as a closure for a casing forming the support (13) and in which the assembly (14) of detectors is fixed and protected.

3. A reading device as claimed in claim 1, characterized in that the transparent plate (11) is fixed on a further transparent plate (12) which acts as a closure for a casing forming the support (13) and in which the assembly (14) of detectors is fixed and protected.

4. A reading device as claimed in claim 1, characterized in that the transparent plate (11a) bears a metallization (20) on its surface opposite to the surface comprising the opaque layer and receives on this opposite surface, by conductive adhesive fixation, at least one semiconductor wafer (14a, 14b, 14c) bearing the photosensitive members forming the detectors.

5. A reading device as claimed in claim 1, characterized in that the diaphragm (10) is formed by a thin opaque layer deposited on a transparent plate itself fixed on a further insulating transparent plate whose opposite surface bears metallizations in the form of conductors and receives, by conductive adhesive fixation, opto-electronic components comprising at least one semiconductor wafer which bears the photosensitive members.

6. A reading device as claimed in any one of the preceding claims, characterized in that the optical system (6) advantageously comprises, opposite a light source and from this light source in the direction of the diaphragm and then the surface of the tracks, a convergence transformer system (7), a collimation system (8) and an astigmatic convergent system (9) successively.

13

7. A reading device as claimed in claim 6, characterized in that the convergence transformer system (7) is formed by a plane-convex lens with its plane surface facing towards the light source.

8. A reading device as claimed in claim 6, characterized in that the convergence transformer system (7) is formed by a convergent meniscus with its concave surface facing towards the light source.

9. A reading device as claimed in any one of claims 6 to 8, characterized in that the collimation system (8) is formed by a plane-convex lens with its plane surface facing towards the light source.

10. A reading device as claimed in any one of claims 6 to 9, characterized in that the astigmatic convergent system (9) is formed by a semi-cylindrical plane-convex lens whose convexity faces towards the collimation system and whose plane surface faces towards the diaphragm.

11. A reading device as claimed in any one of the preceding claims, characterized in that the optical system (6) comprises at least one diopter having, around the optical axis, two different principal meridional curvatures, both convex.

# FIG.1.

# FIG.2.

FIG.3.

FIG.4.